# EUROPEAN PATENT APPLICATION

(11) **EP 1 688 975 A1**
(43) Date of publication of application: **09.08.2006**
(21) Application number: 04819404.7
(22) Date of filing: 25.11.2004
(51) Int. Cl.: H01G 9/008

(54) **CAPACITOR**

(30) Priority: 25.11.2003 JP 2003394430
(71) Applicant: Asahi Glass Company, Limited, Chiyoda-ku, Tokyo 100-8405 (JP)
(72) Inventor: HOZUMI, Yoshihiro c/o Asahi Glass Co. Limited, Yokohama-shi, Kanagawa 2300045 (JP); IKEDA, Katsuji c/o Asahi Glass Company, Limited, Yokohama-shi, Kanagawa 2218755 (JP)
(74) Representative: Müller-Boré & Partner Patentanwälte
(86) International application number: PCT/JP2004/017488
(87) International publication number: WO 2005/052967

(57) **Abstract**

The present invention provides a capacitor which can reduce resistances from an element assembly to terminals, which can reduce inductance, and which can reduce time for producing the element assembly even in a case where the terminal is provided only on one side of an outer casing.

The element assembly 101 is formed by winding electrode bodies 103A and 103 so that end strip portions 108A and 108B of the respective electrode bodies 103A and 103B protrude on the other side from each other from separators 5A and 5B along the longitudinal directions of the separators 5A and 5B. From both ends of spiral shape of the element assembly 101, end strip portions 108A and 108B of the electrode bodies 103A and 103B are independently exposed, and to the end strip portions 108A and 108B, current collector plates 141A and 141B are bonded respectively. Further, the current collector plate 141A is connected with a terminal 33A, and the current collector plate 141B is connected with a terminal 33B, by a short tab portion 151A and a long tab portion 151B respectively.

## Description

### TECHNICAL FIELD

The present invention relates to a capacitor, in particular, to a capacitor which can reduce a resistance between an element assembly and terminals even when terminals are provided only on one side of an outer casing, which can reduce inductance, and which can reduce time for producing the element assembly.

### BACKGROUND ART

Electric double layer capacitors and electrolytic capacitors have each a current collection structure for collecting current from an element assembly in the inside and for electrically connecting the element assembly with terminals for external connection.

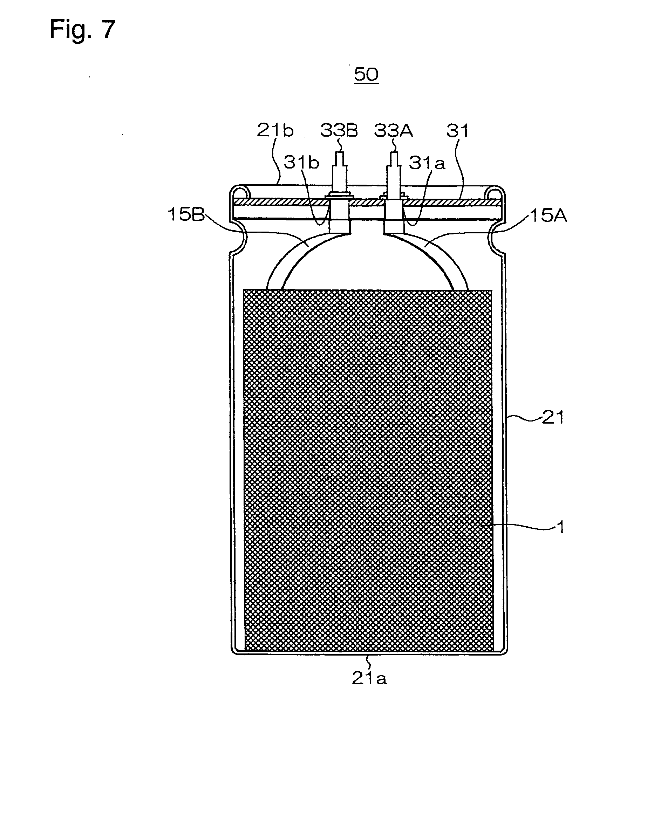

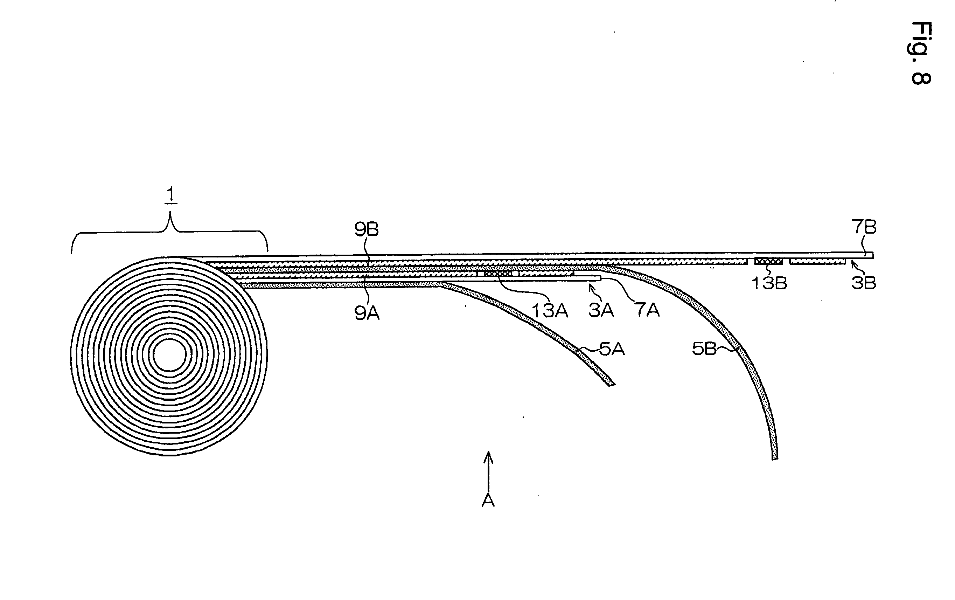

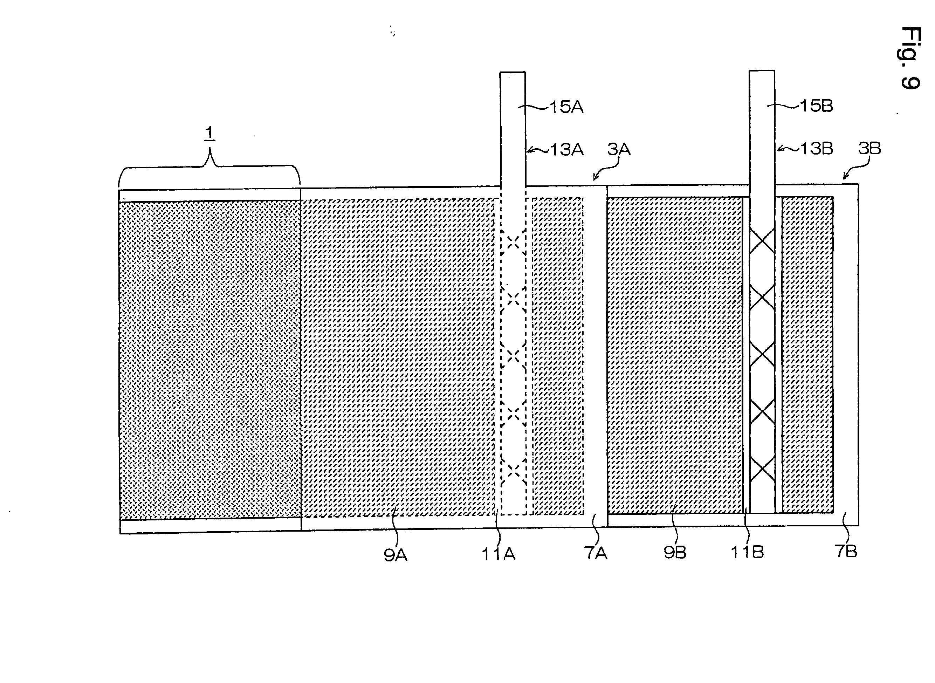

Fig. 7 shows a vertically cross-sectional view of an electric double layer capacitor having a conventional current collection structure. Further, Fig. 8 shows a constructional view of a conventional element assembly, and Fig. 9 shows a view observed from an allow A of Fig. 8 (a separator is omitted). Here, Patent document 1 is known, which describes a capacitor having such a current collection structure.

In Figs. 7 to 9, in a single cell 50 of electric double layer capacitor, a column-shaped element assembly 1 impregnated with an electrolytic solution, not shown, is accommodated in a cylindrical outer casing 21 having a bottom portion 21a, and an opening 21b of the outer casing 21 is sealed with a sealing plate 31.

Here, the element assembly 1 is constituted by a pair of long band-shaped electrode bodies 3A and 3B, and separators 5A and 5B disposed between the electrode bodies 3A and 3B so as to be laminated together, and the element assembly 1 is formed by winding these electrode bodies 3A and 3B and separators 5A and 5B. Here, one of the electrode bodies 3A and 3B constitute a positive electrode and the other constitutes a negative electrode.

Here, the electrode bodies 3A and 3B have current collector foils 7A and 7B respectively that are made of a metal and having a large length, and electrode layers 9A and 9B formed on the surfaces of the electric collector foils 7A and 7B respectively. For the electrode layers 9A and 9B, for example, a material having a large specific surface area such as an activated carbon to form electric double layer in the electric collector foils 7A and 7B to develop current storage function. Here, electrode layers 9A and 9B are formed only on one side of the electric collector foils 7A and 7B respectively in Fig. 9, however, they may be formed on both sides.

Further, in a part of the surfaces of the electrode bodies 3A and 3B on which the electrode layers 9A and 9B are formed respectively, tab-bonding portions 11A and 11B are formed respectively so as to each extend along the full length of the axial direction of the roll of the element assembly 1, in which no electrode layer 9A or 9B is formed. In the tab-bonding portions 11A and 11B, band-shaped tabs 13A and 13B and current collector foils 7A and 7B are bonded respectively by press-bonding or vibration bonding in a state that protrusions 15A and 15B that are ends of the tabs 13A and 13B respectively are protruded outwardly from the electrode bodies 3A and 3B respectively.

Here, the reason why the tab-bonding portions 11A and 11B are formed on the electric collector foils 7A and 7B, is because if the tabs 13A and 13B are bonded at portions where the electrode layers 9A and 9B are formed respectively, sufficient bonding strength may not be obtained since the electrode layers 9A and 9B are made of e.g. an activated carbon.

Here, the positions of the current collector foils 7A and 7B to bond the tabs 13A and 13B respectively are determined so as to sufficiently isolate each other the protrusions 15A and 15B connected to the electrode bodies 3A and 3B respectively having opposite polarities to each other, in a state that a cylindrical element assembly 1 is formed.

As a result, in a state that the element assembly 1 is formed, from one of the spiral-shaped end faces of the element assembly 1 (a side corresponding to the opening 21b of the outer casing 21), the protrusions 15A and 15B of the tabs 13A and 13B protrude in a state that they are isolated from each other, so that they are connected with terminals 33A and 33B respectively attached to through holes 31a and 31a perforating through the sealing plate 31.

In such a construction, current collection from the electrode bodies 3A and 3B constituting the positive electrode and the negative electrode respectively, are carried out by the tabs 13A and 13B respectively. Thus, it is possible to carry out input and output of an electric energy from the element assembly 1 accommodated and sealed in the outer casing 21 to the outside.

Here, in a case where the single cell 50 is used for an electric double layer capacitor or a large-sized electrolytic capacitor, it is necessary to reduce the resistance of the single cell 50 to suppress heat generation of the single cell 50 itself.

For this purpose, it is important to reduce the resistance between the element body 1 and the terminals 33A and 33B, and for this purpose, it is considered to increase the number of tabs instead of bonding only tabs 13A and 13B that are each a single tab bonded to each pole as shown in Figs. 8 and 9.

However, in this case, if the number of tabs 13A and 13B are increased, the number of protrusions 15A and 15B protruding from an end face on the opening 21B side of the element assembly 1, is increased, and it has been necessary to dispose each protrusion 15A bonded to the electrode body 3A so as to be sufficiently isolated from each protrusion 15B connected to the electrode body 3A having opposite polarity, and so as to be disposed at substantially the same position as other protrusions 15A having the same polarity. For this purpose, it has been necessary to increase uniformity of the thickness of the electrode bodies 3A and 3B at a time of winding the electrode bodies 3A and 3B and the separators 5A and 5B, but it has been difficult to determine positions to bond the tab 13A and 13B, and since it has been necessary to momentary stop winding of the element assembly 1 at a time of bonding the tabs 13A and 13B, there has been a possibility that time for producing the element assembly 1 is increased.

Thus, it is technically difficult to bond a large number of tabs 13A and 13B, and practically, it has been able to bond only two or three each of tabs 13A and 13B to the respective polarities. Accordingly, it has not been able to sufficiently increase the numbers of tabs 13A and 13B, and there has been a possibility that a resistance of the single cell 50 increases.

Meanwhile, there has been known a current collection structure that a part of an electric collector foil of an electrode body constituting a positive electrode and a part of an electric collector foil of an electrode body consisting a negative electrode, are independently exposed from the respective end faces of an element assembly, and current collection from the electrode bodies is carried out through the exposed portions. This electric collection structure is disclosed in Patent Document 2.

However, the electric collection structure of Patent Document 2 requires a precondition that bus bars corresponding to the terminals 33A and 33B are disposed on the respective end faces of a module casing.

Accordingly, a single cell having the electric collection structure of Patent Document 2 does not have a construction that terminals 33A and 33B are disposed only on one side that is the side of the opening 21b of the outer casing 21, and there has been a possibility that wiring becomes complicated in a case of wiring single cells together or wiring a single cell with an external circuit, and thus, there has been a possibility that space saving is difficult.
Patent Document 1: JP-A-51-649 (Fig. 1)
Patent Document 2: JP-A-2002-353078 (Fig. 4)

### DISCLOSURE OF THE INVENTION

### PROBLEMS TO BE SOLVED THE BY THE INVENTION

The present invention has been made considering the above conventional problems, and it is an object of the present invention to provide a capacitor which can reduce the resistance from an element assembly to terminals even when the terminals are provided only on one side of the outer casing, which can reduce inductance, and which can reduce time for producing the element assembly.

### MEANS FOR SOLVING THE PROBLEMS

For this purpose, the present invention provides a capacitor comprising an electrolytic solution; a column-shaped element assembly including a positive electrode, a negative electrode and a separator, each of the positive electrode and the negative electrode having a long current collector foil and having an end strip portion extending along an entire length of one side of the current collector foil in a longitudinal direction, the positive electrode and the negative electrode being electrode bodies disposed so as to be opposed to each other, the separator separating the positive electrode and the negative electrode and having ion permeability, wherein the positive electrode, the negative electrode and the separator are wound such that the positive electrode and the negative electrode have at least one portion of the end strip portions projecting from the separator in opposite directions; an outer casing for accommodating the element assembly and the electrolytic solution and having an opening formed at one end; a positive electrode current collector and a negative electrode current collector respectively disposed at both ends of the element assembly, the positive electrode current collector being electrically connected to the end strip portion of the positive electrode, the negative electrode collector being electrically connected to the end strip portion of the negative electrode; a sealing plate for sealing the opening of the outer casing; a positive electrode terminal and a negative electrode terminal attached to though holes perforating through the sealing plate, for inputting and outputting electric energy to outside; and a positive electrode tab portion and a negative electrode tab portion for electrically connecting the positive electrode current collector with the positive electrode terminal and for electrically connecting the negative electrode current collector with the negative electrode terminal respectively.

The positive and negative electrodes are configured so that the end strip portions of the respective current collector foils are positioned at opposite ends of the element assembly to each other. Further, between the positive electrode current collector plate and the positive terminal, and between the negative electrode current collector plate and the negative terminal, the positive tab portion and the negative tab portion are provided respectively, and the positive electrode terminal and the negative electrode terminal are attached to the respective through holes perforating through the sealing plate sealing the outer casing, and thus, it is possible to input and output electric energy from the element assembly to the outside at one side of the outer casing. Accordingly, in a case of connecting outer casings (single cells) each accommodating an element assembly, to each other or in a case of wiring between a single cell and an external circuit, it is possible to make such wirings simple and to facilitate space saving.

Further, in the element assembly of the present invention, there is no need of considering bonding positions of tabs, that have been required in conventional element assemblies. Accordingly, there is no need of momentary stopping winding of the element assembly, and thus it is possible to reduce time for producing the element assembly. Further, in the element assembly of the present invention, instead of conventional bonding of tabs, only connections of a positive electrode current collector plate and a negative electrode current collector plate are required after the winding step of the element assembly, the manufacturing becomes simple, and accordingly, production cost of capacitors can be reduced.

Further, in the present invention, it is preferred that the positive electrode current collector and the negative electrode current collector are disposed in a direction in parallel with a winding cross-section of the element assembly.

By such a construction, since each current collector plate is in contact with the end strip portion of the electrode assembly in full length of the end strip portion, it is possible to reduce the resistance between the electrode body and the current collector plate, it is possible to reduce inductance and it is possible to reduce the resistance of entire capacitor. In particular, in a case of charging or discharging a large current in a short time of at most 1 second, influence of inductance increases as a resistance factor, and thus, application of the structure of the present invention remarkably contribute to reduce the resistance of entire capacitor at a time of charging or discharging a large current in a short time of at most 1 second.

Further, in the present invention, it is preferred that the positive electrode tab portion or the negative electrode tab portion that is connected to the current collector disposed on the side opposite from the sealing plate, is disposed so as to pass through a gap between the outermost peripheral portion of the element assembly and the outer casing.

In the positive electrode current collector plate and the negative electrode current collector plate provided at the respective ends of the element assembly, a current collector plate which is not in proximity with the positive electrode terminal and the negative electrode terminal attached to the through holes, namely, a current collector plate disposed on the opposite side from the sealing plate, is connected with a tab portion connected with the positive electrode terminal or the negative electrode terminal through a gap between the outermost periphery of the element assembly and the outer casing. For this purpose, the length of the positive tab portion or the negative tab portion becomes relatively long.

However, since the positive electrode tab portion or the negative electrode tab portion is disposed between the outermost periphery of the element assembly and the outer casing, its cross-sectional area can be designed without any restriction so long as it can be accommodated in the outer casing. Accordingly, it is possible to design these members so that their resistances are negligible in the resistance of entire unit, and it is possible to reduce the resistance between the current collector plates and the terminals, and thus, it is possible to reduce the resistance of the capacitor as a whole.

Further, in the present invention, it is preferred that the end strip portions of the positive electrode and the negative electrode are respectively welded to central portions of the positive electrode current collector and the negative electrode current collector in radial directions with respect to the respective central portions, and further, it is preferred that the positive electrode current collector and the negative electrode current collector each has a shape symmetrical about a point, and the end strip portions of the positive electrode and the negative electrode are welded to the positive electrode current collector and the negative electrode current collector respectively so as to be symmetrical about the respective central portions, and further, it is preferred that the respective central portions of the positive electrode current collector and the negative electrode current collector are welded to an end of the positive electrode tab portion and an end of the negative electrode tab portion respectively.

By welding in a radial shape, it is possible to make the end strip portion and the current collector plate entirely in contact with each other to reduce contact resistance. Further, by welding in a radial pattern, the contact resistance can be efficiently reduced. Further, it is possible to input and output electric energy from central portions of the positive electrode current collector plate and the negative electrode current collector plate. Accordingly, it is possible to input and output electric energy from the electrode bodies evenly.

Further, the present invention may have such a construction that the positive electrode current collector and the positive electrode tab portion are integrally formed, and the negative electrode current collector and the negative electrode tab portion are integrally formed.

By such a construction, not only the number of members can be reduced but also the number of necessary production steps can be reduced.

Further, the capacitor of the present invention, is preferably an electric double layer capacitor wherein the positive electrode or the negative electrode has an electrode layer formed on at least one side of the current collector foil except for the end strip portion, the electrode layer being made of a material having a high specific surface area.

By forming an electrode layer made of a material having high specific surface area on at least one surface of the electric collector foil, an electric double layer capacitor having efficient electric storage function can be formed.

Further, in the capacitor of the present invention, it is preferred that the current collector foils are made of aluminum or an aluminum alloy, and the positive electrode has a dense oxide film formed on the current collector foil.

### EFFECTS OF THE INVENTION

As described above, according to the present invention, even when a positive electrode and a negative electrode are provided only on one side of a casing, it is possible to reduce connection resistances from an element assembly to the positive electrode terminal and the negative electrode terminal, it is possible to reduce inductance, and it is possible to reduce time to produce the element assembly.

### BRIEF DESCRIPTION OF DRAWINGS

Fig. 1: A vertically cross-sectional view of an electric double layer capacitor having the current collection structure of the present invention.
Fig. 2: A construction view of the element assembly of the present invention.
Fig. 3: A view observed from an arrow B of Fig. 2.
Fig. 4: An enlarged view of a connecting portion of an element assembly and a current collector plate.
Fig. 5: A construction view of the current collector plates of the present invention.

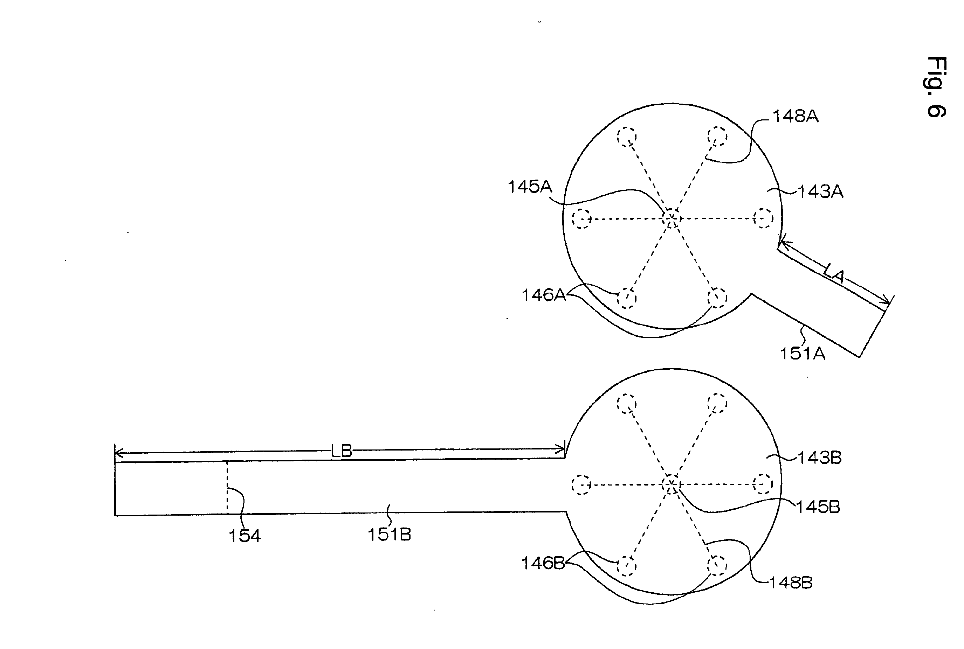

Fig. 6: Another construction view of the current collector plates of the present invention.
Fig. 7: A vertically cross-sectional view of an electric double layer capacitor having a conventional current collection structure.
Fig. 8: A construction view of a conventional element assembly.
Fig. 9: A view observed from an arrow A of Fig. 8.

### MEANINGS OF SYMBOLS

- 1, 101:: Element assembly
- 3A, 3B, 103A, 103B:: Electrode body
- 5A, 5B:: Separator
- 7A, 7B, 107A, 107B:: Current collector foil
- 9A, 9B:: Electrode layer
- 21:: Outer casing
- 31:: Sealing plate
- 33A, 33B:: Terminal
- 50, 100:: Single cell
- 108A, 108B:: End strip portion
- 141A, 141B:: Current collector plate
- 145a, 145B:: Central portion
- 146A, 146B:: Welding spot
- 148A, 148B:: Linear welding portion
- 151A, 151B:: Short tab portion, long tab portion

### BEST MODE FOR CARRYING OUT THE INVENTION

From now, embodiments of the present invention will be described.

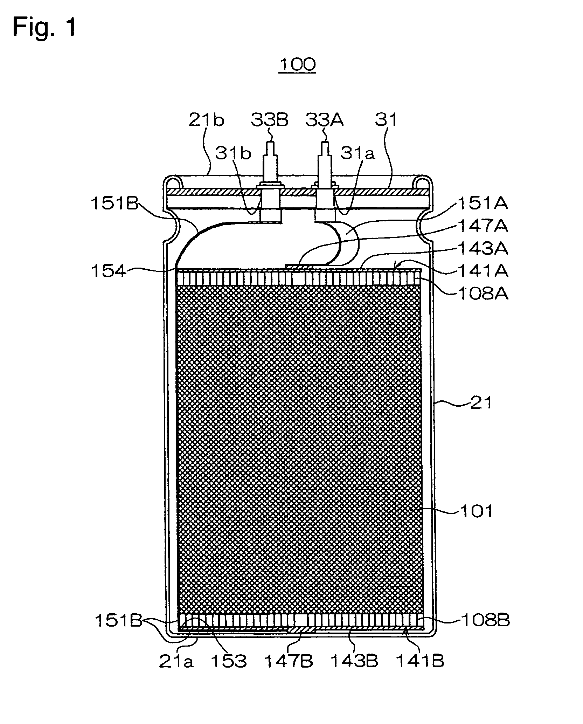

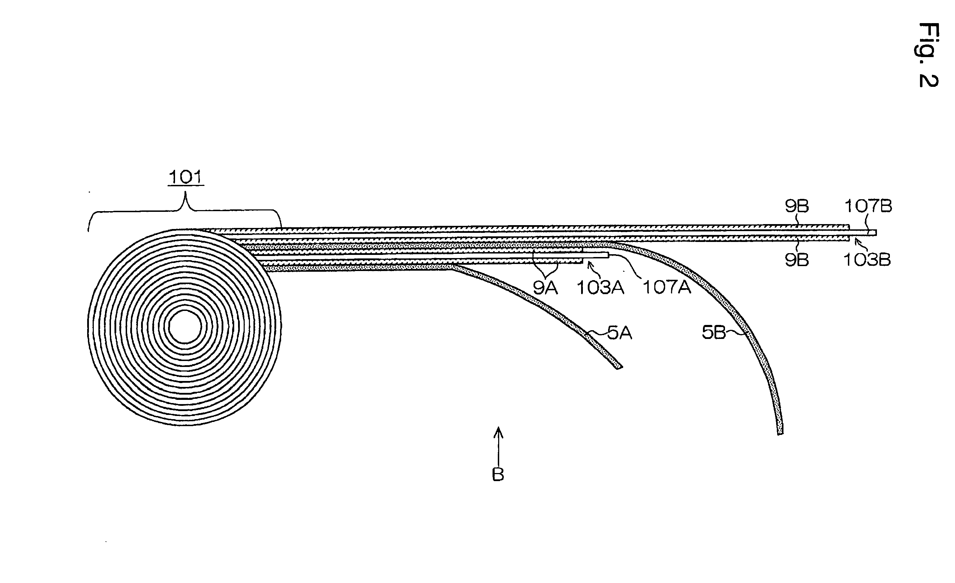

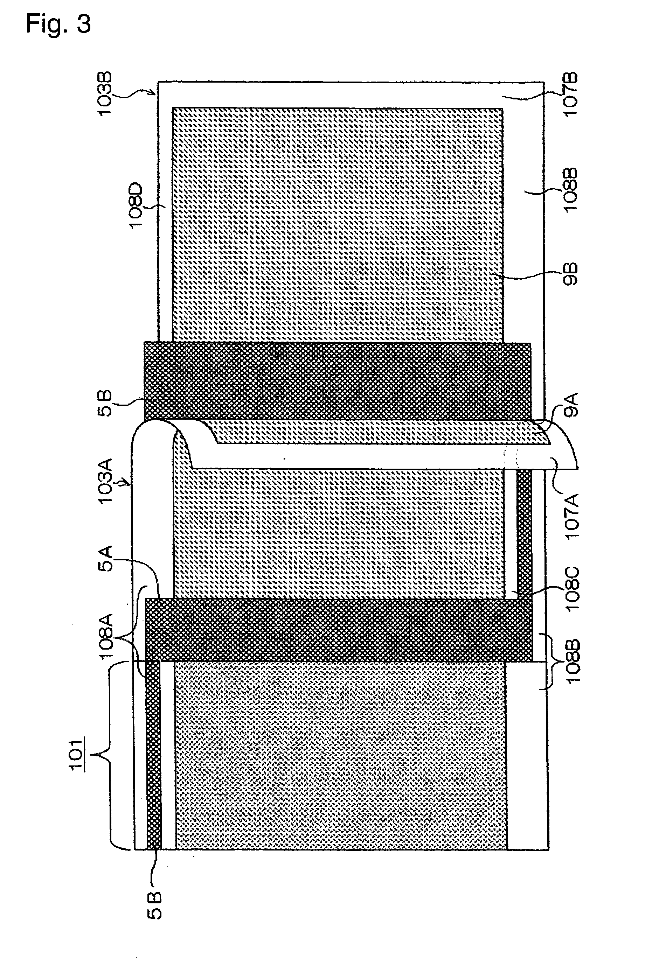

Fig. 1 shows a vertically cross-sectional view of an electric double layer capacitor having the current collection structure as an embodiment of the present invention. Further, Fig. 2 shows a construction view of an element assembly of the present invention, and Fig. 3 shows a view observed from an arrow B of Fig. 2. Here, elements in common with those of Figs. 7 to 9 have the same reference numerals and their descriptions are omitted.

In Figs. 1 to 3, a single cell 100 of the electric double capacitor of the present invention has, in the same manner as the conventional single cell 50, a construction that a column shaped element assembly 101 impregnated with an electrolytic solution, not shown, is accommodated in an outer casing 21 and sealed by a sealing plate 31.

Here, electrode bodies 103A and 103b constituting a positive electrode and a negative electrode respectively of the element assembly 101 of the present invention, have a long band shaped current collector foils 107A and 107B respectively, and electrode layers 9A and 9B are formed on both surfaces of the current collector foils 107A and 107B respectively so that they occupy entire surfaces except end strip portions 108A and 108B present along in full length of one side in the direction of their lengths.

Here, for the electrode layers 9A and 9B, in the same manner as the conventional electrode bodies 3A and 3B, a material having high specific surface area is employed to form an electric double layer on the current collector foils 107A and 107B to develop electric storage function. The electrode layers 9A and 9B are formed on both sides of the electric collector foils 107A and 107B respectively. However, the electrode layers 9A and 9B may be formed on one side of the electric collector foils 107A and 107B respectively. Further, in Fig. 3, in the electrode bodies 103A and 103B, strip portions 108C and 108D are slightly remaining on opposite sides from the end strip portions 108A and 108B respectively, and the strip portions 108C and 108D show only necessary margins between the electric collector foil 107A and 9A and the electrode layers 107B and 9B respectively for producing the electrode bodies 103A and 103B, and the strip portions 108C and 108D are preferably not provided from the viewpoint of energy density of the element assembly 101.

Further, the element bodies 103A and 103B are wound so that their respective end strip portions 108A and 108B protrude in the opposite side from each other from the separators 5A and 5B and along the separators 5A and 5B, whereby a column shaped element assembly 101 is formed. Here, in the outermost peripheral portion of the element assembly 101, an insulating member, not shown is disposed to cover the electrode body 103A or the electrode body 103B. The insulating member is preferably a separator 5. By employing a separator 5 longer than the electrode bodies 103A and 103B and winding it with the electrode bodies 103A and 103B, an element assembly 101 having an outermost peripheral portion covered by the separator 5 can be easily obtained, such being preferred. Further, in the element assembly 101 of the present invention, no tab-bonding portion 11A or 11B is formed in the electrode body 103A and 103B of the conventional element assembly 1, and the tabs 13A and 13B are not bonded.

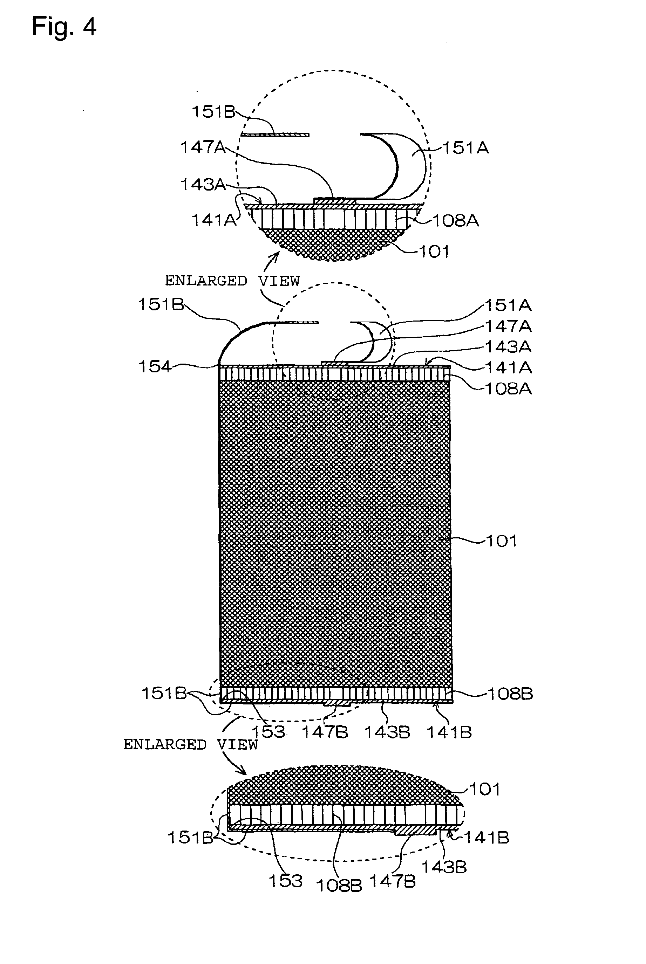

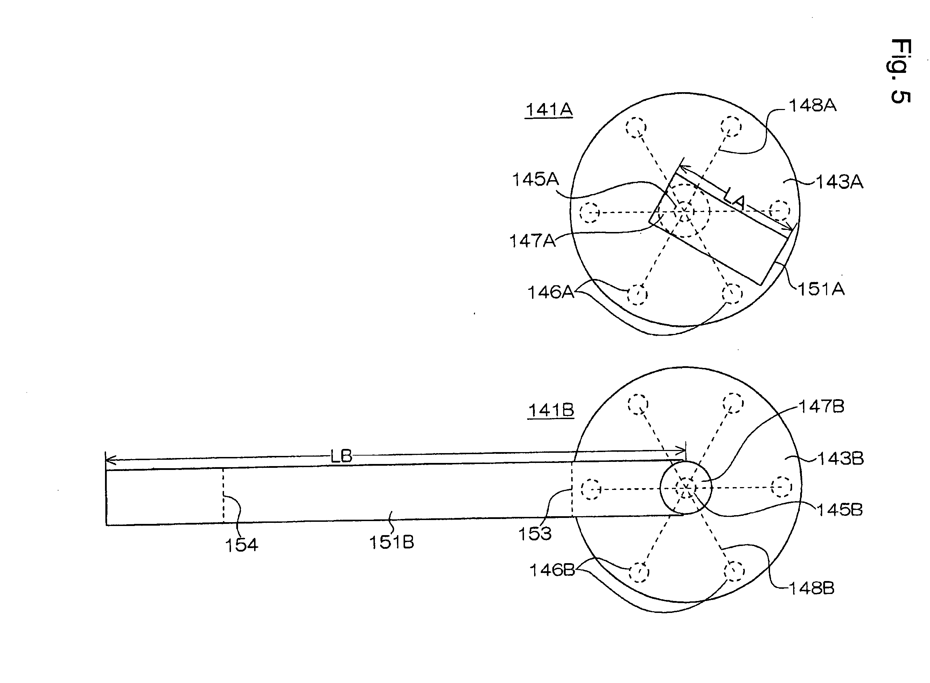

Further, from both spiral-shaped ends of the element assembly 101 thus formed, the end strip portions 108A and 108B of the electrode members 103A and 103B respectively are independently exposed. Further, the end strip portions 108A and 108B are configured to be bonded with current collector plates 141A and 141B. Fig. 4 includes enlarged views of bonded portions where the element assembly is bonded with the respective current collector plates, and Fig. 5 shows a construction view of the current collector plates.

In Figs. 4 and 5, the current collector plates 141A and 141B each has a point symmetric shape, and they have disk shaped plates 143A and 143B each having approximately the same area as that of the wound cross section of the element assembly 101, and they are provided in a direction in parallel with the wound cross section. Further, on one surface of each of the plates 143A and 143B, end strip portions 108A and 108B of the electrode bodies 103A and 103B are bonded respectively. Here, the bonding of the end strip portions 108A and 108B and the plates 143A and 143B respectively, may be carried out by a mechanical pressing or conductive bonding with a conductive adhesive agent, but the bonding is preferably carried out by welding having high mechanical and electrical reliability. Further, as such a welding, an ultrasonic welding, a laser welding by e.g. a YAG laser or an electron beam welding, is preferably employed.

Further, in this welding, in order to make the distance from the central portion 145A or 145B of a plate portion 143A or 143B respectively to each welding spots 146A or 146B equal, the welding is preferably carried out in a radial pattern from the central portion towards the outer periphery. For example, as shown in Fig. 5, total seven spots are provided in the plate portion 143A or 143B, the seven spots comprises one spot in the central portion (central portion 145A or 145B), and six spots at evenly divided position in the vicinity of the outer periphery of the plate portion 143A or 143B (welding spot 146A or 146B), and line weldings are made from the central portion 145A or 145B to the welding spots 146A or 146B in a radial pattern (the linear welding portions are shown as linear welding portions 148A or 148B in Fig. 5). When the number of linear weldings are 4 or more, the electrode body 103A or 103B and the electric collector plate 141A or 141B respectively can be entirely in contact, and contact resistance can be reduced, such being preferred. Further, if the linear welding is made at an angle symmetrical about the symmetric center (central portion 145A or 145B), the contact resistance can be sufficiently reduced, such being preferred.

On the other hand, in the plate portion 143A or 143B, on the other surface in which the end strip portion 108A or 108B is not bonded, a small protrusion 147A or 147B protruding from the central portion of the plate portion 143A or 143B is provided. Further, it is preferred that a punched hole or a notch, not shown, is formed on the plate portion 143A or 143B so as not to prevent the electrolytic solution from impregnating from the end face of the element assembly 101.

Further, in an electric collector plate 141 bonded to the end strip portion 108A disposed on the opening 21b side when the element assembly 101 is accommodated in the outer casing 21, a band shaped short tab portion 151A having one end connected to the electric collector plate 141A is disposed so as to cover the small protrusion 147A. The length LA in the longitudinal direction of the short tab portion 151A is made longer than the distance between the small protrusion 147A and the terminal 33A by a predetermined length so as to have a margin for connecting with the terminal 33A when the element assembly 101 is accommodated in the outer casing 21.

On the other hand, the electric collector plate 141B to be bonded to the end strip portion 108B disposed on the bottom 21a side when the element assembly 101 is accommodated in the outer casing 21, is provided with a band shaped long tab portion 151B having one end connected with the side portion of the small protrusion 147B of the electric collector plate 141B. The length LB in the longitudinal direction of the long tab portion 151B is made longer than the length LA of the short tab portion 151A, and longer than the distance to the terminal 33B through the gap between the outer peripheral portion of the element assembly 101 and the outer casing 21 by a predetermined length so as to have a margin for connecting with the terminal 33B when the element assembly 101 is accommodated in the outer casing 21.

Further, such a short tab portion 151A and a long tab portion 151B are each designed to have a cross-sectional area so that its resistance becomes sufficiently smaller than the inherent resistance of the element assembly 101 and so as to satisfy the resistance required for the complete single cell 100.

Additionally, in Fig. 1, the element assembly 101 provided with such current collector plates 141A and 141B and a short tab portion 151A and a long tab portion 151B, is accommodated in the outer casing 21 and sealed by the sealing plate 31, the other end of the short tab portion 151A is connected with the terminal 33A attached to a through hole 31a, and the other end of the long tab portion 151B is connected with a terminal 33B attached to a through hole 31b.

Here, the short tab portion 151A is in a state of arch shape according to the difference between the length of the short tab portion 151A and the distance between the small protrusion 147A and the terminal 33A.

Further, to the long tab portion 151B, two bent portions 153 and 154 are formed in this order from the small protrusion 147B so that the long tab portion 151B extends from the small protrusion 147B of the current collector plate 141B through a gap between the outermost periphery of the element assembly 101 and the outer casing 21, to be connected with the terminal 33B. Further, the long tab portion 151B is provided so that its longitudinal direction is along a radial direction of the plate portion 143B from the small protrusion 147B to the bent portion 153, and along the axial direction of the roll of the element assembly 101 from the bent portion 153 to the bent portion 154, and further, it is in a state of arch shape from the bent portion 154 to the terminal 33B.

Here, the long tab portion 151B is disposed between the outermost peripheral portion of the element assembly 101 and the outer casing 21 within the range of from the bent portion 153 to the bent portion 154, and an isolation member, not shown, is provided in the outermost peripheral portion of the element assembly 101 so that no short circuit occurs to e.g. the electrode body 103A or 103B in the element assembly 101. Further, in the vicinity of the bent portion 154 of the long tab portion 151B, the long tab portion 151B is in proximity with the current collector plate 141A connected with the electrode body 103A of the other polarity, and an insulation member, not shown, is interposed in this portion so as to isolate these members from each other. Here, when the outermost peripheral portion of the element assembly 101 is constituted by a separator 5, it is not necessary to provide an additional isolation member.

In such a construction, current collection from the electrode bodies 103A and 103B constituting the positive electrode and the negative electrode respectively, is conducted by the end strip portions 108A and 108B, the current collector plates 141A and 141B and the short tab portion 151A and the long tab portion 151B respectively.

Here, on both ends of the element assembly 101, the end strip portions 108A and 108B of the electrode bodies 103A and 103B respectively, are exposed from the bottom 21a side and the opening 21b side respectively of the outer casing 21, and the current collector plates 141A and 141B are bonded to the end strip portions 108A and 108B respectively.

Further, since a long tab portion 151B is provided between the current collector plate 141B bonded to the end strip portion 108B in the bottom 21a side, and the terminal 33B, the terminals 33A and 33B are disposed only on the opening 21b side of the outer casing 21, namely, only on the sealing plate 31.

Further, the long tab portion 151B is relatively long, but its cross-sectional area is designed so that the resistance of the long tab portion 151B becomes sufficiently smaller than the inherent resistance of the element assembly 101 to satisfy the resistance required for a complete single cell 100. Particularly, since the long tab portion 151B is connected with the terminal 33B through a gap between the outermost peripheral portion of the element assembly 101 and the outer casing 21, the cross-sectional area can be designed without any restriction within a range that it can be accommodated in the outer casing 21. Accordingly, the resistance of the long tab portion 151B is negligible to the resistance of entire single cell 100. This feature is also applied to the short tab portion 151A.

Since the current collector plates 141A and 141B contact with the terminal strip portions 108A and 108B of the electrode bodies 103A and 103B respectively by the above construction, the resistances between the electrode bodies 103A and 103B and the electric collector plates 141A and 141B respectively, can be reduced. Further, by the above welding, since the welding is formed in a radial pattern from the central portion of each of the plates 143A and 143B towards the outer periphery, inputting and outputting of electric energy can be carried out evenly from the electrode bodies 103A and 103B.

Further, since the long tab portion 151B is provided in the electric collector plate 141B on the bottom 21a side, inputting and outputting of electric energy from the element assembly 101 to the outside can be carried out only on the opening 21b side of the outer casing. Accordingly, in a case of wiring the single cells 100 to each other or in a case of wiring a single cell 100 with outside circuits, wires can be easily connected and space saving can be easily achieved.

Further, the cross-sectional areas of the short tab portion 151A and the long tab portion 151B, are designed so that their resistances become negligible to the resistance of entire single cell 100, and thus it is possible to reduce the resistances between the current collector plates 141A and 141B and the terminals 33A and 33B respectively.

Accordingly, the terminals 33A and 33B can be disposed only on one side of the opening 21b side of the outer casing 21, and the resistances from the element assembly to the terminals 33A and 33B can be reduced.

Further, in the element assembly 101 of the present invention, there is no need of considering the boding positions of the tabs 13A and 13B required in the conventional element assembly 1. Therefore, it is not necessary to momentary stop winding of the element assembly 101, and thus, time to produce the element assembly 101 can be reduced.

Further, in the element assembly 101 of the present invention, instead of bonding conventional tabs 13A and 13B, only bonding of the current collector plates 141A and 141B have to be carried out separately after the production step of the element assembly 101, and thus, the production step of the element assembly 101 is simple. Accordingly, production cost of the single cell 100 can be reduced.

Here, in the present invention, the short tab portion 151A and the long tab portion 151B are explained to be connected with small protrusions 147A and 147B of the electric collector plates 141A and 141B respectively. However, the construction is not limited thereto. Namely, so long as the plate portions 143A and 143B of the current collector plates are electrically in contact with the terminals 33A and 33B (refer to Fig. 1) respectively, the short tab portion 151A and the long tab portion 151B may be integrally formed together with the plate portions 143A and 143B respectively of the current collector plate.

### EXAMPLES

The most suitable example of an electric double layer capacitor having the above current collection structure of the present invention, is described.

The material of the current collector foils 107A and 107B to be employed for the electrode bodies 103A and 103B constituting the positive and negative electrodes, are not particularly limited so long as it is excellent in electrochemical corrosion resistance. However, from the viewpoint of manufacturability and light weight, foils of aluminum, an aluminum alloy or a stainless steel, is preferred.

Further, the material having high specific surface area to be employed for the electrode layers 9a and 9B, contains as the main component a carbon material having a specific surface area of from 100 to 3,000 m²/g, and an activated carbon of resin type such as phenol resin, a coconut shell type, a cokes type or a pitch type, or a carbon nano tube, a carbon aero gel, a polyacene or the like may be suitably employed, and as a conductive auxiliary agent, carbon black, a carbon short fiber or a metallic fiber is preferred. Further, the electrode layers 9A and 9B to be employed for positive and negative electrodes may be constituted by the same material, or may be constituted by different materials from each other.

Further, the material of the separators 5A and 5B may be any material so long as it has ion permeability, and is preferably constituted by a porous material excellent in electrical insulation and chemical stability against electrolytic solution and liquid-retaining property which can absorb a large amount of electrolytic solution. Specifically, an inorganic material such as a glass fiber, a silica fiber, an alumina fiber, an asbesto or e.g. a whisker of these materials, or an organic material such as a paper material such as a Manila hemp paper, a cellulose paper, a craft paper or a mixed paper of rayon fiber and sisal hemp, a synthesized polymer fiber such as polyolefin or polyester, is preferred. Further, e.g. a sheet formed by weaving these materials, a micro porous film provided with fine holes by drawing, or the like is preferred.

Further, the material of the current collector plates 141A and 141B, is preferably the same material as the current collector foils 107A and 107B, and is most preferably aluminum, an aluminum alloy or a stainless steel. Further, the material of the short tab portion 151A and the long tab portion 151B, is preferably the same material as the current collector foils 107A and 107B, and is most preferably aluminum, an aluminum alloy or a stainless steel. Here, considering workability at a time of designing and reduction of resistance of the single cell 100, the thicknesses of the current collector plate 141A and 141B, short tab portion 151A and the long tab portion 151B, are preferably at most 0.8 mm. Further, the lengths of the short tab portion 151A and the long tab portion 151B are preferably as short as possible within the acceptable range from the design point of view.

Further, the material of the terminals 33A and 33B, is preferably the same material as the electrode bodies 103A and 103B to reduce the resistance and for bonding with the short tab portion 151A and the long tab portion 151B, and is the most preferably aluminum, an aluminum alloy or a stainless steel, but copper may also be employed for the material.

Here, in a case where the element assembly is an aluminum electrolytic capacitor, the materials of the current collector foils 107A and 107B are both aluminum or an aluminum alloy, and the current collector foil 107A is an etched foil for negative electrode, and the current collector foil 107B is an etched foil for positive electrode, and there is no need of providing the electrode layers 9A and 9B. Here, the positive electrode is one constituted by a current collector foil 107B on which a dense oxide film is formed. Further, the negative electrode is preferably constituted by a current collector foil 107A that is subjected to an extension treatment and a stabilization treatment to form a thin film.

According to an experiment of the inventors employing such a single cell 100, as compared with a single cell 50 having a conventional structure shown in Patent Document 1, the resistance from the element assembly 101 to the terminals 33A and 33B can be reduced to at most 1/5 of the resistance of the single cell 50.

### INDUSTRIAL APPLICABILITY

According to the present invention, even when a positive electrode terminal and a negative electrode terminal are provided only on one side of a casing, connection resistances from an element assembly to the positive electrode terminal and the negative electrode terminal, can be reduced, and inductance can be reduced, and further, time to produce the element assembly can be reduced, whereby the present invention can be applied to a capacitor, an electric double layer capacitor or an aluminum electrolytic capacitor.

## Claims

1. A capacitor comprising:
an electrolytic solution;
a column-shaped element assembly including a positive electrode, a negative electrode and a separator, each of the positive electrode and the negative electrode having a long current collector foil and having an end strip portion extending along an entire length of one side of the current collector foil in a longitudinal direction, the positive electrode and the negative electrode being electrode bodies disposed so as to be opposed to each other, the separator separating the positive electrode and the negative electrode and having ion permeability, wherein the positive electrode, the negative electrode and the separator are wound such that the positive electrode and the negative electrode have at least one portion of the end strip portions projecting from the separator in opposite directions;
an outer casing for accommodating the element assembly and the electrolytic solution and having an opening formed at one end;
a positive electrode current collector and a negative electrode current collector respectively disposed at both ends of the element assembly, the positive electrode current collector being electrically connected to the end strip portion of the positive electrode, the negative electrode current collector being electrically connected to the end strip portion of the negative electrode;
a sealing plate for sealing the opening of the outer casing;
a positive electrode terminal and a negative electrode terminal attached to though holes perforating through the sealing plate, for inputting and outputting electric energy to outside; and
a positive electrode tab portion and a negative electrode tab portion, for electrically connecting the positive electrode current collector with the positive electrode terminal and for electrically connecting the negative electrode current collector with the negative electrode terminal respectively.

2. The capacitor according to Claim 1, wherein the positive electrode current collector and the negative electrode current collector are disposed in a direction in parallel with a winding cross-section of the element assembly.

3. The capacitor according to Claim 1 or 2, wherein the positive electrode tab portion or the negative electrode tab portion that is connected to the current collector disposed on the side opposite from the sealing plate, is disposed so as to pass through a gap between the outermost peripheral portion of the element assembly and the outer casing.

4. The capacitor according to Claim 1, 2 or 3, wherein the end strip portions of the positive electrode and the negative electrode are respectively welded to central portions of the positive electrode current collector and the negative electrode current collector in radial directions with respect to the respective central portions.

5. The capacitor according to any one of Claims 1 to 4, wherein the respective central portions of the positive electrode current collector and the negative electrode current collector are welded to an end of the positive electrode tab portion and an end of the negative electrode tab portion respectively.

6. The capacitor according to Claim 5, wherein the positive electrode current collector and the negative electrode current collector each has a shape symmetrical about a point, and the end strip portions of the positive electrode and the negative electrode are welded to the positive electrode current collector and the negative electrode current collector respectively so as to be symmetrical about the respective central portions.

7. The capacitor according to any one of Claims 1 to 4, wherein the positive electrode current collector and the positive electrode tab portion are integrally formed, and the negative electrode current collector and the negative electrode tab portion are integrally formed.

8. An electric double layer capacitor which is the capacitor as defined in any one of Claims 1 to 7, wherein the positive electrode or the negative electrode has an electrode layer formed on at least one side of the current collector foil except for the end strip portion, the electrode layer being made of a material having a high specific surface area.

9. An aluminum electrolytic capacitor which is the capacitor as defined in any one of Claims 1 to 7, wherein the current collector foils are made of aluminum or an aluminum alloy, and the positive electrode has a dense oxide film formed on the current collector foil.
